# EUROPEAN PATENT SPECIFICATION

(11) **EP 4 179 797 B1**
(45) Date of publication and mention of the grant of the patent: **08.10.2025**
(21) Application number: 21941243.4
(22) Date of filing: 11.05.2021
(51) Int. Cl.: H04W 52/14, H04W 52/40, H04W 52/08, H04W 52/32, H04W 52/48, H04W 52/58

(54) **METHOD AND APPARATUS FOR ENHANCED INDICATION OF TPC COMMAND VALUE FOR UPLINK TRANSMISSION IN MULTI-TRP OPERATION**
VERFAHREN UND VORRICHTUNG ZUR VERBESSERTEN ANZEIGE EINES TPC-BEFEHLSWERTS FÜR UPLINK-ÜBERTRAGUNG IN MULTI-TRP-BETRIEB
PROCÉDÉ ET DISPOSITIF POUR UNE INDICATION AMÉLIORÉE D'UNE VALEUR D'INSTRUCTION TPC POUR UNE TRANSMISSION EN LIAISON

(43) Date of publication of application: 17.05.2023
(73) Proprietor: ZTE Corporation, Shenzhen, Guangdong 518057 (CN)
(72) Inventor: ZHANG, Yang, Shenzhen, Guangdong 518057 (CN); JIANG, Chuangxin, Shenzhen, Guangdong 518057 (CN); GAO, Bo, Shenzhen, Guangdong 518057 (CN); YAO, Ke, Shenzhen, Guangdong 518057 (CN); WU, Hao, Shenzhen, Guangdong 518057 (CN); LU, Zhaohua, Shenzhen, Guangdong 518057 (CN)
(74) Representative: Vossius & Partner Patentanwälte Rechtsanwälte mbB
(86) International application number: PCT/CN2021/093028
(87) International publication number: WO 2022/236667

(56) References cited:
- EP-A1- 4 195 792
- WO-A1-2021/026683
- WO-A1-2021/043006
- CN-A- 110 858 996
- CN-A- 111 901 021
- NTT DOCOMO ET AL: "Discussion on MTRP for reliability", vol. RAN WG1, no. e-Meeting; 20200817 - 20200828, 7 August 2020 (2020-08-07), XP051915450, Retrieved from the Internet <URL:https://ftp.3gpp.org/tsg_ran/WG1_RL1/TSGR1_102-e/Docs/R1-2006719.zip R1-2006719.docx> [retrieved on 20200807]
- SAMSUNG: "Enhancements on Multi-TRP for PDCCH, PUCCH and PUSCH", 3GPP TSG RAN WG1 #104B-E R1-2103222, 20 April 2021 (2021-04-20), XP052178003
- QUALCOMM INCORPORATED: "Enhancements on Multi-TRP for PDCCH, PUCCH and PUSCH", 3GPP TSG-RAN WG1 MEETING #104-BIS-E R1-2103151, 20 April 2021 (2021-04-20), XP052177951

## Description

### TECHNICAL FIELD

The present implementations relate generally to wireless communications, and more particularly to enhanced indication of TPC command value for uplink transmission in multi-TRP operation.

### BACKGROUND

Under various conventional protocols, PUSCH repetition is not supported under multi-TRP based PDSCH repetition. This lack of support for multi-TRP based PDSCH repetition in PUSCH repetition can cause a bottleneck for the reliability of whole system when multi-TRP based PDSCH repetition is adopted. Thus, in conventional systems, when a link between a UE and a TRP is impacted on blockage, the PUSCH repetition based on single-TRP would not be reliable anymore.

NTT DOCOMO, Inc at al. discloses "Discussion of MTRP for reliability" in 3GPP Draft R1-2006719. EP 4 196 792 A1 is a document under Art. 54(3) EPC and relates to a terminal, wireless communication method and base station.

### SUMMARY

In order to enhance the robustness and reliability for PUSCH transmission, single DCI based Multi-TRP PUSCH repetition is desired. For Multi-TRP operation, due to different channel conditions of links between UE and multiple TRPs, parameters of transmissions towards different TRP can be TRP-specific, such as a TPC command value of closed loop power control. Thus, a technological solution for enhanced indication of TPC command value for uplink transmission in multi-TRP operation is desired.

The invention is specified by the independent claims. Preferred embodiments are defined in the dependent claims. In the following description, although numerous features may be designated as optional, it is nevertheless acknowledged that all features comprised in the independent claims are not to be read as optional. Example implementations include a method wireless communication, as defined by claims 1 and 4.

### BRIEF DESCRIPTION OF THE DRAWINGS

These and other aspects and features of the present implementations will become apparent to those ordinarily skilled in the art upon review of the following description of specific implementations in conjunction with the accompanying figures, wherein:
Fig. 1 illustrates an example cellular communication network in which techniques and other aspects disclosed herein may be implemented, in accordance with an implementation of the present disclosure.
Fig. 2 illustrates block diagrams of an example base station and a user equipment device, in accordance with some implementations of the present disclosure.
Fig. 3 illustrates a first example system, in accordance with present implementations.
Fig. 4 illustrates a first example method of uplink transmission in multi-TRP operation at a wireless communication device, in accordance with present implementations.
Fig. 5 illustrates an example method of uplink transmission in multi-TRP operation at a wireless communication device further to the example method of Fig. 4.
Fig. 6 illustrates a second example method of uplink transmission in multi-TRP operation at a wireless communication device, in accordance with present implementations.
Fig. 7 illustrates an example method of uplink transmission in multi-TRP operation at a wireless communication node, in accordance with present implementations.

### DETAILED DESCRIPTION

The present implementations will now be described in detail with reference to the drawings, which are provided as illustrative examples of the implementations so as to enable those skilled in the art to practice the implementations and alternatives apparent to those skilled in the art. Notably, the figures and examples below are not meant to limit the scope of the present implementations to a single implementation, but other implementations are possible by way of interchange of some or all of the described or illustrated elements. Moreover, where certain elements of the present implementations can be partially or fully implemented using known components, only those portions of such known components that are necessary for an understanding of the present implementations will be described, and detailed descriptions of other portions of such known components will be omitted so as not to obscure the present implementations. Implementations described as being implemented in software should not be limited thereto, but can include implementations implemented in hardware, or combinations of software and hardware, and vice-versa, as will be apparent to those skilled in the art, unless otherwise specified herein. In the present specification, an implementation showing a singular component should not be considered limiting; rather, the present disclosure is intended to encompass other implementations including a plurality of the same component, and vice-versa, unless explicitly stated otherwise herein. Moreover, applicants do not intend for any term in the specification or claims to be ascribed an uncommon or special meaning unless explicitly set forth as such.

It is to be understood that various protocols can include a number of MIMO features that facilitate utilization of a large number of antenna elements at base station for both sub-6GHz (Frequency Range 1, FR1) and over-6GHz (Frequency Range 2, FR2) frequency bands. As one example, one of the MIMO features supports for multi-TRP operation. This functionality can allow system and devices to collaborate with multiple TRPs to transmit data to the UE to improve transmission performance.

It is to be further understood that, under various protocols, the power of uplink transmission can be controlled dynamically by TPC command, which can be indicated by one TPC command field in a DCI format and can correspond to a configured closed loop index. For MTRP based uplink transmission/repetition in Rel-17, there can be two TPC command fields in DCI to indicate TPC command values to uplink transmissions/repetitions configured with two different closed loop indices, respectively. In some implementations, one PUCCH resource is configured or activated with two power control parameter sets for PUCCH transmission/repetitions, with each power control parameter set toward one TRP and including at least one of a closed loop index, a value target received power p0, or a path loss estimation reference signal index. For single-DCI based MTRP PUCCH transmission/repetition scheme under various protocols, one PUCCH resource can be configured or activated with two spatial relations for PUCCH transmission/repetition, and each spatial relation towards one TRP. Further, there can be two TPC command fields in the single DCI to indicate TPC command values to PUCCH transmissions/repetitions configured with two different closed loop indices, respectively. For MTRP PUSCH transmission/repetition scheme under various protocols, two SRS resource set can be configured for PUSCH transmission/repetition, and each SRS resource set can correspond to one TRP. Further, there are can be two TPC command fields in the single DCI to indicate TPC command values to PUSCH transmissions/repetitions configured with two different closed loop indices, respectively.

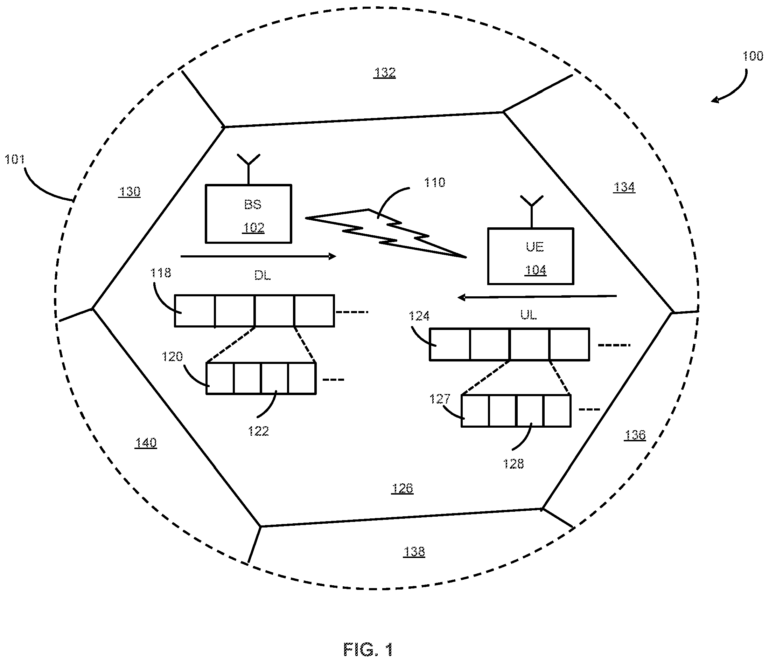

Fig. 1 illustrates an example wireless communication network, and/or system, 100 in which techniques disclosed herein may be implemented, in accordance with an implementation of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102") and a user equipment device 104 (hereinafter "UE 104") that can communicate with each other via a communication link 110 (e.g., a wireless communication channel), and a cluster of cells 126, 130, 132, 134, 136, 138 and 140 overlaying a geographical area 101. In Fig. 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various implementations of the present solution.

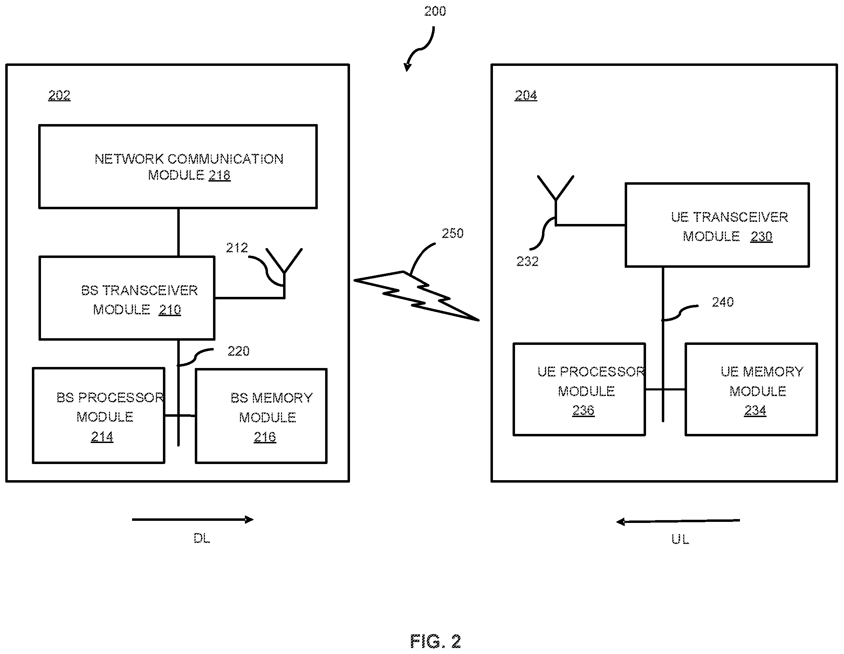

Fig. 2 illustrates a block diagram of an example wireless communication system 200 for transmitting and receiving wireless communication signals, e.g., OFDM/OFDMA signals, in accordance with some implementations of the present solution. The system 200 may include components and elements configured to support known or conventional operating features that need not be described in detail herein. In one illustrative implementation, system 200 can be used to communicate (e.g., transmit and receive) data symbols in a wireless communication environment such as the wireless communication environment 100 of Fig. 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Fig. 2. Those skilled in the art will understand that the various illustrative blocks, modules, circuits, and processing logic described in connection with the implementations disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some implementations, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some implementations, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 can be coordinated in time such that the uplink receiver circuitry is coupled to the uplink antenna 232 for reception of transmissions over the wireless transmission link 250 at the same time that the downlink transmitter is coupled to the downlink antenna 212. In some implementations, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative implementations, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various implementations, the BS 202 may be an evolved node B (eNB), a serving eNB, a target eNB, a femto station, or a pico station, for example. In some implementations, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the implementations disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some implementations, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

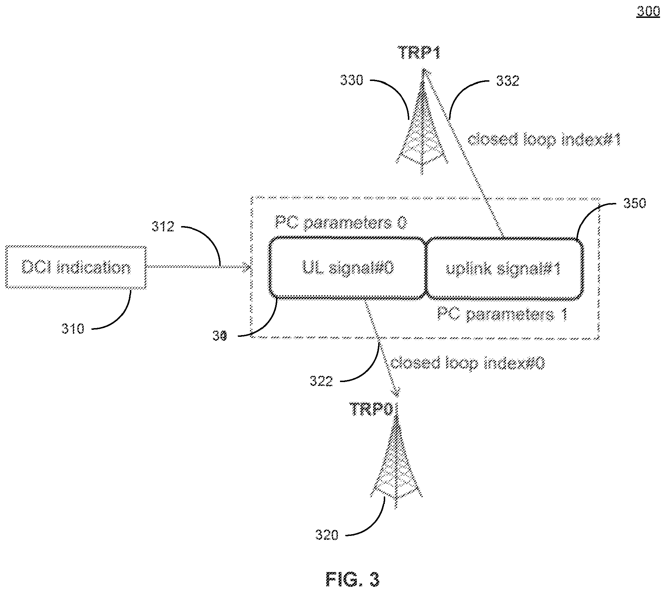

Fig. 3 illustrates a first example system, in accordance with present implementations. As illustrated by way of example in Fig. 3, an example system 300 includes a DCI indication 310, transmission parameters 312, TRP0 320, SRS closed loop index 0 322, TRP1 330, closed loop index 1 332, uplink signal 0 340, and uplink signal 1 350.

Under various protocols, TPC (Transmission Power Control) command is used for dynamically power control/ adjustment for uplink transmissions (e.g., PUSCH, PUCCH and SRS), which is indicated by TPC command field in DCI indication. In some implementations, TPC command value corresponds to one closed loop power control for uplink transmission. For MTRP operation, two TPC command fields in DCI can indicate two TPC command values for uplink transmissions configured with two closed loop indices and towards two TRPs. In some implementations, it is advantageous to use the two TPC command fields to indicate the TPC command value of the uplink transmissions should be solved when all of the uplink transmissions are configured with one same closed loop index.

In some implementations, the UE receives DCI indication from the NW to determine the TPC command value of multiple PUCCH transmissions. As one example, the multiple PUCCH transmissions can be PUCCH repetitions. As another example, there can be a plurality of fields of TPC command for scheduled PUCCH in the DCI indication. As another example, the DCI overhead of each TPC command field can be 2 bits. As another example, the DCI indication can be at least one of DCI Format 1_1 or 1_2. As another example, the multiple PUCCH transmissions are scheduled by the DCI indication. As another example, one same PUCCH resource is indicated by the field of PUCCH resource indicator in the DCI to the multiple PUCCH transmissions. As another example, the PUCCH resource can be configured or activated with a plurality of spatial relations. As another example, the plurality of spatial relations can be configured with a plurality of closed loop indices, respectively. As another example, the PUCCH resource can be configured or activated with a plurality of power control parameter sets. As another example, each power control parameter set at least includes a closed loop index. In some implementations, when the a plurality of closed loop indices corresponding to the PUCCH resource are the same, the TPC command value of all PUCCH transmissions are the same and depend on the a plurality of TPC command fields. As one example, when the number of the TPC command fields is two, up to 16 candidates of the TPC command value can be jointly indicated by the two TPC command fields with a total of 4 bits.

In some implementations, the UE receives DCI indication from the NW to determine the TPC command value of multiple PUCCH transmissions. As one example, the multiple PUCCH transmissions can be PUCCH repetitions. As another example, there can be a plurality of fields of TPC command for scheduled PUCCH in the DCI indication. As another example, the DCI overhead of each TPC command field can be 2 bits. As another example, the DCI indication can be at least one of DCI Format 1_1 or 1_2. In some implementations, the multiple PUCCH transmissions are scheduled by the DCI indication. In some implementations, one same PUCCH resource is indicated by the field of PUCCH resource indicator in the DCI to the multiple PUCCH transmissions. As one example, the PUCCH resource can be configured or activated with a plurality of spatial relations. As another example, the plurality of spatial relations can be configured with a plurality of closed loop indices, respectively. As another example, the PUCCH resource can be configured or activated with a plurality of power control parameter sets In some implementations, each power control parameter set at least includes a closed loop index.

In some implementations, when the a plurality of closed loop indices corresponding to the PUCCH resource are the same, the TPC command value of all PUCCH transmissions are same and depends on the a plurality of TPC command fields. As one example, the TPC command value is equal to the value indicated by the first TPC command field plus the value indicated by other than the first TPC command fields. As another example, the TPC command value indicated by each of the other TPC command fields can be mandatory, fixed, corresponding, or the like, to 0 dB.

In some implementations, the UE receives DCI indication from the NW to determine the TPC command value of multiple PUCCH transmissions. As one example, the multiple PUCCH transmissions can be PUCCH repetitions. As another example, there can be a plurality of fields of TPC command for scheduled PUCCH in the DCI indication. As another example, the DCI overhead of each TPC command field can be 2 bits. As another example, the DCI indication can be at least one of DCI Format 1_1 or 1_2. In some implementations, multiple PUCCH transmissions are scheduled by the DCI indication. In some implementations, one same PUCCH resource is indicated by the field of PUCCH resource indicator in the DCI to the multiple PUCCH transmissions. As one example, the PUCCH resource can be configured or activated with a plurality of spatial relations. As another example, the plurality of spatial relations can be configured with a plurality of closed loop indices, respectively. As another example, the PUCCH resource can be configured or activated with a plurality of power control parameter sets. In some implementations, each power control parameter set at least includes a closed loop index. In some implementations, when the plurality of closed loop indices corresponding to the PUCCH resource are the same, the TPC command value of all PUCCH transmissions are the same and solely depend on the first TPC command field. As one example, a number of most significant bits with corresponding values set to '0' or '1' can be inserted to each of the other TPC command fields. As another example, the same bits as the first TPC command field can be inserted to each of the other TPC command fields.

In some implementations, the UE receives DCI indication from the NW to determine the TPC command value of a multiple PUCCH transmissions. As one example, the multiple PUCCH transmissions can be PUCCH repetitions. As another example, there can be a plurality of fields of TPC command for scheduled PUCCH in the DCI indication. As another example, DCI overhead of each field can be 2 bits. As another example, the DCI indication can be at least one of DCI Format 1_1 or 1_2. In some implementations, the multiple PUCCH transmissions are scheduled by the DCI indication. In some implementations, one same PUCCH resource is indicated by the field of PUCCH resource indicator in the DCI to the multiple PUCCH transmissions. As one example, the PUCCH resource can be configured or activated with a plurality of spatial relations. As another example, the plurality of spatial relations can be configured with a plurality of closed loop indices, respectively. As another example, the PUCCH resource can be configured or activated with a plurality of power control parameter sets. In some implementations, each power control parameter set at least includes a closed loop index. In some implementations, when the plurality of closed loop indices corresponding to the PUCCH resource are different, a plurality of TPC command values of all PUCCH transmissions depend on each of the TPC command fields, respectively. In some implementations, when the number of TPC command fields is two, where, the value of the first TPC command field is applied for the PUCCH transmissions associated with the first closed loop index, the value of the second TPC command field is applied for the PUCCH transmissions associated with the second closed loop index.

In some implementations, the UE receives DCI indication from the NW to determine the TPC command value of a multiple PUCCH transmissions. As one example, the multiple PUCCH transmissions can be PUCCH repetitions. As another example, there can be a plurality of fields of TPC command for scheduled PUCCH in the DCI indication. As another example, the DCI overhead of each field can be 2 bits. As another example, the DCI indication can be at least one of DCI Format 1_1 or 1_2. In some implementations, the multiple PUCCH transmissions are scheduled by the DCI indication. In some implementations, one same PUCCH resource is indicated by the field of PUCCH resource indicator in the DCI to the multiple PUCCH transmissions. As one example, the PUCCH resource is configured or activated with only one spatial relations in a PUCCH resource set, and the PUCCH resource set also includes PUCCH resource(s) with a plurality of spatial relations. As another example, the one spatial relation is configured with a single closed loop index. As another example, the PUCCH resource is configured or activated with a single power control parameter set. As another example, the power control parameter set at least includes a closed loop index. In some implementations, the TPC command value corresponds to the single closed loop index of all the PUCCH transmissions and solely depends on the first TPC command field in the DCI indication which includes a plurality of TPC command fields. As one example, a number of most significant bits with value set to '0' or '1' can be inserted to each of the other TPC command fields. As another example, the same bits as the first TPC command field can be inserted to each of the other TPC command fields.

In some implementations, the UE receives DCI indication from the NW to determine the TPC command value of a multiple PUCCH transmissions. As one example, multiple PUCCH transmissions can be PUCCH repetitions. As another example, there can be a plurality of fields of TPC command for scheduled PUCCH in the DCI indication. As another example, the DCI overhead of each field can be 2 bits. As another example, the DCI indication can be at least one of DCI Format 1_1 or 1_2. In some implementations, multiple PUCCH transmissions are scheduled by the DCI indication. In some implementations, one same PUCCH resource is indicated by the field of PUCCH resource indicator in the DCI to the multiple PUCCH transmissions. As one example, the PUCCH resource is configured or activated with only one spatial relations in a PUCCH resource set, and the PUCCH resource set also includes PUCCH resource(s) with a plurality of spatial relations. As another example, the one spatial relation is configured with a single closed loop index. As another example, the PUCCH resource is configured or activated with only one power control parameter set. In some implementations, the power control parameter set at least includes a single closed loop index. As one example, the TPC command value corresponds to the single closed loop index of all the PUCCH transmissions and also can jointly depend on one or more of the a plurality of TPC command fields in the DCI indication. As another example, when the number of TPC command fields is two, the TPC command value can be one out of 16 candidates which jointly indicated by the two TPC command fields with a total of 4 bits. As another example, the TPC command value can be equal to the value indicated by the first TPC command field plus the value indicated by the other than the first TPC command field. As another example, the TPC command value indicated by each of the other TPC command fields can be mandatory, fixed, corresponding, or the like, to 0 dB.

In some implementations, the UE receives DCI indication from the NW to determine the TPC command value of a multiple PUSCH transmissions. As another example, the multiple PUSCH transmissions can be PUSCH repetitions. As another example, there can be a plurality of fields of TPC command for scheduled PUSCH in the DCI indication. As another example, the DCI overhead of each field can be 2 bits. As another example, the DCI indication can be at least one of DCI Format 0_1 or 0_2. In some implementations, the multiple PUSCH transmissions can be scheduled by the DCI indication with dynamic grant and/or configured by RRC with configured grant. In some implementations, one field can be used to indicate whether the PUSCH transmissions are associated with one or a plurality of SRS resource sets, which are configured with a same higher layer parameter usage in SRS-ResourceSet. In some implementations, the SRS-ResourceSet is set to one of a 'codeBook' or a 'nonCodeBook' option. In some implementations, whether the one field is present or not depends on an RRC configuration. As one example, the one field can determine whether there is a plurality of SRI fields, or a plurality of TPMI fields, or a plurality of PTRS-DMRS association fields, or a plurality of OLPC indication fields, etc. As one example, when the one field is 1 bit, all of the PUSCH transmissions are associated with one or all of the plurality of SRS resource sets. As another example, when the one field is more than 1 bit, all of the PUSCH transmissions can be associated with any one or all of the plurality of SRS resource sets. As another example, a plurality of spatial relations corresponding to the plurality of SRS resource sets can be configured with a plurality of closed loop indices. As another example, a plurality of power control parameter sets corresponding to the plurality of SRS resource sets can be associated with a plurality of closed loop indices, respectively. In some implementations, when the plurality of closed loop indices corresponding to a plurality of SRS resource sets are the same, the TPC command value of all PUSCH transmissions can be the same and depend on the a plurality of TPC command fields. In some implementations, when the number of TPC command fields is two, there are up to 16 candidates of the TPC command value that can be jointly indicated by the two TPC command fields with a total of 4 bits.

In some implementations, the UE receives DCI indication from the NW to determine the TPC command value of a multiple PUSCH transmissions. As one example, the multiple PUSCH transmissions can be PUSCH repetitions. As another example, there can be a plurality of fields of TPC command for scheduled PUSCH in the DCI indication. As another example, the DCI overhead of each field can be 2 bits. As another example, the DCI indication can be at least one of DCI Format 0_1 or 0_2. As another example, the multiple PUSCH transmissions can be scheduled by the DCI indication with a dynamic grant or configured by RRC with configured grant, or both. As another example, one field can be used to indicate whether the PUSCH transmissions are associated with one or a plurality of SRS resource sets which are configured with a same higher layer parameter usage in SRS-ResourceSet set to one of a 'codeBook' or 'nonCodeBook' option. In some implementations, whether the one field is present or not can depend on RRC configuration. As one example, the one field can determine whether there is a plurality of SRI fields, or a plurality of TPMI fields, or a plurality of PTRS-DMRS association fields, or a plurality of OLPC indication fields, etc. In some implementations, when the one field is 1 bit, all of the PUSCH transmissions are associated with one or all of the plurality of SRS resource sets. In some implementations, when the one field is more than 1 bit, all of the PUSCH transmissions can be associated with any one or all of the plurality of SRS resource sets. As one example, a plurality of spatial relations corresponding to the plurality of SRS resource sets can be associated with a plurality of closed loop indices, respectively. As another example, a plurality of power control parameter sets corresponding to the plurality of SRS resource sets can be configured with a plurality of closed loop indices, respectively. In some implementations, when the plurality of closed loop indices corresponding to the plurality of SRS resource sets are the same, the TPC command value of all PUSCH transmissions can be the same and depend on the plurality of TPC command fields. In some implementations, the TPC command value is equal to the value indicated by the first TPC command field plus the value indicated by other than the first TPC command field. As one example, the TPC command value indicated by each of the other TPC command fields can be mandatory, fixed, corresponding, or the like, to 0 dB.

In some implementations, the UE receives DCI indication from the NW to determine the TPC command value of a multiple PUSCH transmissions. As one example, the multiple PUSCH transmissions can be PUSCH repetitions. As another example, there can be a plurality of fields of TPC commands for scheduled PUSCH in the DCI indication. As another example, the DCI overhead of each field can be 2 bits. As another example, the DCI indication can be at least one of DCI Format 0_1 or 0_2. As another example, the multiple PUSCH transmissions can be scheduled by the DCI indication with dynamic grant and/or configured by RRC with configured grant. As another example, one field can be used to indicate whether the PUSCH transmissions are associated with one or a plurality ofSRS resource sets which are configured with a same higher layer parameter usage in SRS-ResourceSet set to one of a 'codeBook' or 'nonCodeBook' option. In some implementations, whether the one field is present or not depends on RRC configuration. As one example, the one field can determine whether there is a plurality of SRI fields, or a plurality of TPMI fields, or a plurality of PTRS-DMRS association fields, or a plurality of OLPC indication fields, etc. In some implementations, when the one field is 1 bit, all of the PUSCH transmissions are associated with one or all of the plurality of SRS resource sets. As one example, when the one field is more than 1 bit, all of the PUSCH transmissions can be associated with any one or all of the plurality of SRS resource sets. As another example, a plurality of spatial relations corresponding to the plurality of SRS resource sets can be associated with a plurality of closed loop indices, respectively. As another example, a plurality of power control parameter sets corresponding to the plurality of SRS resource sets can be associated with a plurality of closed loop indices, respectively. In some implementations, when the plurality of closed loop indices corresponding to the plurality of SRS resource sets are the same, the TPC command value of all PUSCH transmissions can be the same and can solely depend on the first TPC command fields. As one example, a number of most significant bits with value set to '0' or '1' can be inserted to each of the other TPC command fields. As another example, the same value of bits as the first TPC command field can be inserted to each of the other TPC command fields.

In some implementations, the UE receives DCI indication from the NW to determine the TPC command value of a multiple PUSCH transmissions. As one example, the multiple PUSCH transmissions can be PUSCH repetitions. As another example, there can be a plurality of fields of TPC command for scheduled PUSCH in the DCI indication. As another example, the DCI overhead of each field can be 2 bits. As another example, the DCI indication can be at least one of DCI Format 0_1 or 0_2. As another example, the multiple PUSCH transmissions can be scheduled by the DCI indication with dynamic grant, or configured by RRC with configured grant, or both. As another example, one field can be used to indicate whether the PUSCH transmissions are associated with one or a plurality of SRS resource sets which are configured with a same higher layer parameter usage in SRS-ResourceSet set to one of a 'codeBook' or 'nonCodeBook' option. As another example, whether the one field is present or not depends on RRC configuration. As one example, the one field can determine whether there is a plurality of SRI fields, or a plurality of TPMI fields, or a plurality of PTRS-DMRS association fields, or a plurality of OLPC indication fields, etc. In some implementations, when the one field is 1 bit, all of the PUSCH transmissions are associated with one or all of the plurality of SRS resource set. As one example, when the one field is more than 1 bit, all of the PUSCH transmissions can be associated with any one or all of the plurality of SRS resource sets. As another example, a plurality of spatial relations corresponding to the plurality of SRS resource sets can be associated with a plurality of closed loop indices, respectively. As another example, a plurality of power control parameter sets corresponding to the plurality of SRS resource sets can be associated with a plurality of closed loop indices, respectively. In some implementations, when the plurality of closed loop indices corresponding to the plurality of SRS resource sets are the different, the TPC command value of PUSCH transmissions are based on the value of all of the plurality of TPC command fields, respectively. In some implementations, when the number of TPC command fields is two, where the value of the first TPC command field is applied for the PUSCH transmissions associated with the first SRS resource set, the value of the second TPC command field is applied for the PUSCH transmissions associated with the second SRS resource set.

In some implementations, the UE receives DCI indication from the NW to determine the TPC command value of a multiple PUSCH transmissions. As one example, the multiple PUSCH transmissions can be PUSCH repetitions. As another example, there can be a plurality of fields of TPC commands for scheduled PUSCH in the DCI indication. As another example, the DCI overhead of each field can be 2 bits. As another example, the DCI indication can be at least one of DCI Format 0_1 or 0_2. As another example, the multiple PUSCH transmissions can be scheduled by the DCI indication with dynamic grant and/or configured by RRC with configured grant. As another example, one field can be used to indicate whether the PUSCH transmissions are associated with one or a plurality of SRS resource sets which are configured with a same higher layer parameter usage in SRS-ResourceSet set to one of a 'codeBook' or 'nonCodeBook' option. In some implementations, whether the one field is present or not depends on RRC configuration. As one example, the one field can determine whether there is a plurality of SRI fields, or a plurality of TPMI fields, or a plurality of PTRS-DMRS association fields, or a plurality of OLPC indication fields, etc. As one example, when the one field is 1 bit, all of the PUSCH transmissions are associated with one or all of the plurality of SRS resource sets. As another example, when the one field is more than 1 bit, all of the PUSCH transmissions can be associated with any one or all of the plurality of SRS resource sets. As another example, a plurality of spatial relations corresponding to the plurality of SRS resource sets can be associated with a plurality of closed loop indices, respectively. As another example, a plurality of power control parameter sets corresponding to the plurality of SRS resource sets can be associated with a plurality of closed loop indices, respectively. In some implementations, where all of the PUSCH transmissions are associated with one SRS resource set and one closed loop index corresponding to the SRS resource sets are configured, the TPC command value of all the PUSCH transmissions can be solely based on the value of the first TPC command fields. As one example, a number of most significant bits with value set to '0' or '1' can be inserted to each of the other TPC command fields. As another example, the same bits as the first TPC command field can be inserted to each of the other TPC command fields.

In some implementations, the UE receives DCI indication from the NW to determine the TPC command value of a multiple PUSCH transmissions. As one example, the multiple PUSCH transmissions can be PUSCH repetitions. As another example, there can be a plurality of fields of TPC command for scheduled PUSCH in the DCI indication. As another example, the DCI overhead of each field can be 2 bits. As another example, the DCI indication can be at least one of DCI Format 0_1 or 0_2. In some implementations, the multiple PUSCH transmissions can be scheduled by the DCI indication with dynamic grant, or configured by RRC with configured grant, or both. In some implementations, one field can be used to indicate whether the PUSCH transmissions are associated with one or a plurality of SRS resource sets which are configured with a same higher layer parameter usage in SRS-ResourceSet set to one of a 'codeBook' or 'nonCodeBook' option. In some implementations, whether the one field is present or not depends on RRC configuration. As one example, the one field can determine whether there is a plurality of SRI fields, or a plurality of TPMI fields, or a plurality of PTRS-DMRS association fields, or a plurality of OLPC indication fields, etc. As one example, when the one field is 1 bit, all of the PUSCH transmissions are associated with one or all of the plurality of SRS resource set. As another example, when the one field is more than 1 bit, all of the PUSCH transmissions can be associated with one or all of the plurality of SRS resource sets. As another example, a plurality of spatial relations corresponding to the plurality of SRS resource sets can be associated with a plurality of closed loop indices, respectively. As another example, a plurality of power control parameter sets corresponding to the plurality of SRS resource sets can be associated with a plurality of closed loop indices, respectively. In some implementations, when all of the PUSCH transmissions are associated with one SRS resource set and one closed loop index corresponding to the SRS resource sets are configured, the TPC command value of all the PUSCH transmissions can jointly depend on the plurality of TPC command fields. As one example, when the number of TPC command field is two, the TPC command value can be one out of 16 candidates which jointly indicated by the two TPC command fields with a total of 4 bits. As another example, when the number of TPC command field is two, the TPC command value can be equal to the value indicated by the first TPC command field plus the value indicated by the second TPC command field. As another example, the TPC command value indicated by the second TPC command field can be mandatory, fixed, corresponding, or the like, to 0 dB.

In some implementations, the UE obtains one or a plurality of TPC command values from a DCI format 2_2 with CRC scrambled by a TPC-PUCCH-RNTI for multiple PUCCH repetitions. In some implementations, the DCI indication contains a plurality of closed loop indicators and TPC command fields which are used for a plurality of corresponding blocks, one by one. In some implementations, the DCI overhead of each closed loop indicator can be 0 bits or 1 bit. As one example, the DCI overhead of each closed loop indicator can be 0 bits if the UE is not configured with high layer parameter twoPUSCH-PC-AdjustmentStates, in which case UE assumes each block in the DCI format 2_2 is of 2 bits. As another example, the DCI overhead of each closed loop indicator can be 1 bit, in which case UE assumes each block in the DCI format 2_2 is of 3 bits. As another example, the DCI overhead of each TPC command field can be 2 bits. In some implementations, when the PUCCH resource of the multiple PUCCH repetitions is configured or activated with a plurality of spatial relations, a plurality of blocks correspond to the PUCCH repetitions with the plurality of spatial relations, respectively. In some implementations, when the PUCCH resource of the multiple PUCCH repetitions is configured or activated with a plurality of power control parameter sets, a plurality of blocks correspond to the PUCCH repetitions with the plurality of power control parameter sets, respectively. In some implementations, each power control parameter set at least includes a closed loop index. In some implementations, when the plurality of closed loop indicators of are the same, the TPC command value of all PUCCH repetitions are the same and depend on the plurality of TPC command fields. As one example, when the number of TPC command fields is two, the TPC command value can be one of up to 16 candidates which jointly indicated by the two TPC command fields with a total of 4 bits. As another example, the TPC command value can be equal to the value indicated by the first TPC command field plus the value(s) indicated by each of other than the first TPC command field. As another example, the TPC command value indicated by each of the other TPC command fields can be mandatory, fixed, corresponding, or the like, to 0 dB. As another example, when the plurality of closed loop indices of are the same, the TPC command value of all PUCCH repetitions should be same and solely depends on one TPC command field. As another example, a number of most significant bits with value set to '0' or '1' can be inserted to each of the other TPC command fields. As another example, the same value of bits as the first TPC command field can be inserted to each of the other TPC command field. As another example, when the plurality of closed loop indices of are different, the TPC command value of PUCCH transmissions are based on the value of each of the plurality of TPC command fields, respectively. In some implementations, when the number of TPC command fields is two, where the value of the first TPC command field is applied for the PUCCH transmissions with the first closed loop index, the value of the second TPC command field is applied for the PUCCH transmissions with the second closed loop index. In some implementations, when the PUCCH resource of the multiple PUCCH repetitions is configured or activated with same spatial relations, one block corresponds to all of the PUCCH repetitions. In some implementations, the TPC command value of all the PUCCH repetitions should be same and depends on the one TPC command field.

In some implementations, the UE obtains one or a plurality of TPC command values from a DCI format 2_2 with CRC scrambled by a TPC-PUSCH-RNTI for multiple PUSCH repetitions. As one example, the DCI indication may contains a plenty of closed loop indicators and TPC command fields which used for a plenty of blocks one by one. As another example, the DCI overhead of each closed loop indicator can be 0 bit or 1 bits. 0 bit if the UE is not configured with high layer parameter twoPUSCH-PC-AdjustmentStates, in which case UE assumes each block in the DCI format 2_2 is of 2 bits; 1 bit otherwise, in which case UE assumes each block in the DCI format 2_2 is of 3 bits. As another example, the DCI overhead of each TPC command field can be 2 bits. In some implementations, when all of the PUSCH repetitions are associated with a plurality of SRS resource sets, a plurality of blocks are corresponded to the PUSCH repetitions associated with the plurality of SRS resource sets, respectively. As another example, a plurality of spatial relations corresponding to the plurality of SRS resource sets can be configured a plurality of two closed loop indicators. In some implementations, when the plurality of closed loop indicators are the same, the TPC command value of all PUSCH repetitions should be same and depends on the plurality of TPC command fields. As one example, when the number of TPC command fields is two, TPC command value can be one of up to 16 candidates which jointly indicated by the two TPC command fields with a total of 4 bits. As another example, the TPC command value can be equal to the value indicated by the first TPC command field plus the value indicated by each of other than the first TPC command field. As another example, the TPC command value indicated by each of the other TPC command fields can be mandatory, fixed, corresponding, or the like, to 0 dB.

In some implementations, when the plurality of closed loop indicators are the same, the TPC command value of all PUSCH repetitions are the same and solely depend on one the first TPC command field. As one example, a number of most significant bits with value set to '0' or '1' can be inserted to each of other than the first TPC command field. As another example, the same value of bits as the first TPC command field can be inserted to each of the first TPC command field. In some implementations, when the plurality of closed loop indicators are different, the TPC command value of PUSCH transmissions are based on the value of each of the plurality of TPC command fields, respectively. In some implementations, when the number of TPC command fields is two, the value of the first TPC command field is applied for the PUSCH transmissions associated with the first SRS resource set, the value of the second TPC command field is applied for the PUSCH transmissions associated with the second SRS resource set. In some implementations, when all of the PUSCH repetitions are associated with one SRS resource set, one blocks corresponds to all of the PUSCH repetitions. In some implementations, the TPC command value of all the PUCCH repetitions are the same and depend on the one TPC command field.

In some implementations, the UE obtains one or plurality of TPC command values from a DCI format 2_3 with CRC scrambled by a TPC-SRS-RNTI for multiple SRS repetitions. In some implementations, the DCI indication contains a plenty of SRS request fields and TPC command fields which used for a plenty of blocks one by one. As one example, the DCI overhead of each closed loop indicator can be 0 or 2 bits. As another example, the DCI overhead of each TPC command field can be 2 bits. In some implementations, when the SRS resource of the multiple SRS repetitions is configured or activated with a plurality of spatial relations, a plurality of blocks are associated with the SRS repetitions with the plurality of spatial relations, respectively. Furthermore, the a plurality of spatial relations can be configured with a plurality of power control adjustment state. In some implementations, when the plurality of power control adjustment states are the same, the TPC command value of all SRS repetitions are the same and can depend on the plurality of TPC command fields. As one example, when the number of TPC command fields is two, the TPC command value can be one of up to 16 candidates which jointly indicated by the two TPC command fields with a total of 4 bits. As another example, the TPC command value can be equal to the value indicated by the first TPC command field plus the value indicated by each of other than the first TPC command field. As another example, the TPC command value indicated by each of the other TPC command fields can be mandatory, fixed, corresponding, or the like, to 0 dB.

In some implementations, when the plurality of power control adjustment states are the same, the TPC command value of all SRS repetitions are the same and solely depend on one the first TPC command field. As one example, number of most significant bits with value set to '0' or '1' can be inserted to each of the other TPC command fields. As another example, the same value of bits as the first TPC command field can be inserted to each of the other TPC command field. In some implementations, when the plurality of power control adjustment states are different, the TPC command value of SRS repetitions are based on the value of each of the plurality of TPC command fields, respectively. In some implementations, when the number of TPC command fields is two, where the value of the first TPC command field is applied for the SRS repetitions with the first spatial relation, the value of the second TPC command field is applied for the SRS repetitions with the second spatial relation. In some implementations, when the SRS resource of the multiple SRS repetitions is configured or activated with one same spatial relation, one block corresponds to all of the SRS repetitions. In some implementations, the TPC command value of all the PUCCH repetitions are the same and depend on the one TPC command field.

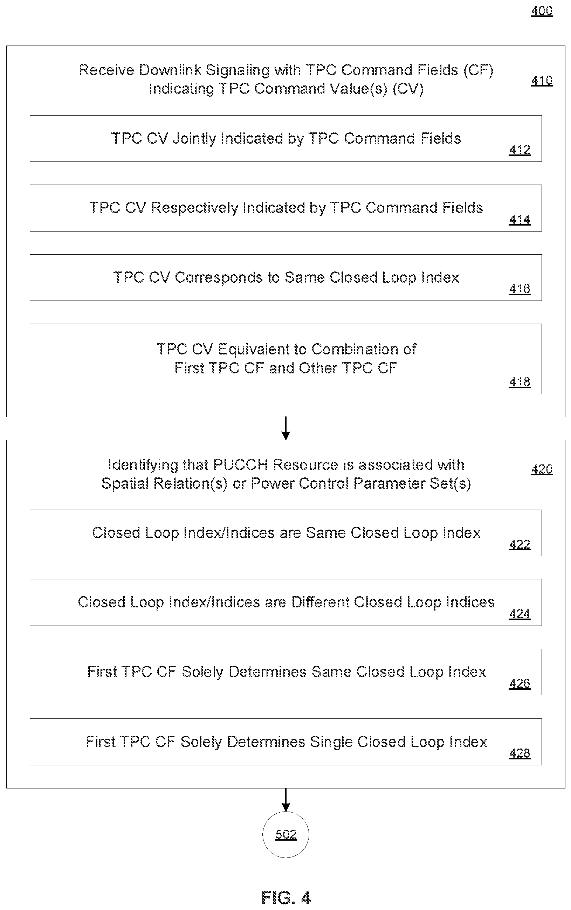

Fig. 4 illustrates a first example method of uplink transmission in multi-TRP operation at a wireless communication device, in accordance with present implementations. In some implementations, at least one of the example system 100, system 200, and UE 204 performs method 400 according to present implementations. In some implementations, the method 400 begins at step 410.

At step 410, the example system receives downlink signaling with TPC command fields indicating one or more TPC command values. In some implementations, step 410 includes at least one of steps 412, 414, 416 and 418. At step 412, the one or more TPC command values are jointly indicated by the TPC command fields. At step 414, the one or more TPC command values are respectively indicated by the TPC command fields. At step 416, the one or more TPC command values correspond to the same closed loop index. At step 418, the one or more TPC command values are equivalent to a combination of a first one of the TPC command fields and another subsequent TPC command field. The method 400 then continues to step 420.

At step 420, the example system identifies that a PUCCH resource is associated with one or more spatial relations or one or more power control parameters. In some implementations, step 420 includes at least one of steps 422, 424, 426 and 428. At step 422, the at least one closed loop index is a same closed loop index. At step 424, the example system at least one closed loop index is a plurality of different closed loop indices. At step 426, the first TPC command field solely determines a same closed loop index. At step 428, the first TPC command field solely determines a single closed loop index. The method 400 then continues to step 502.

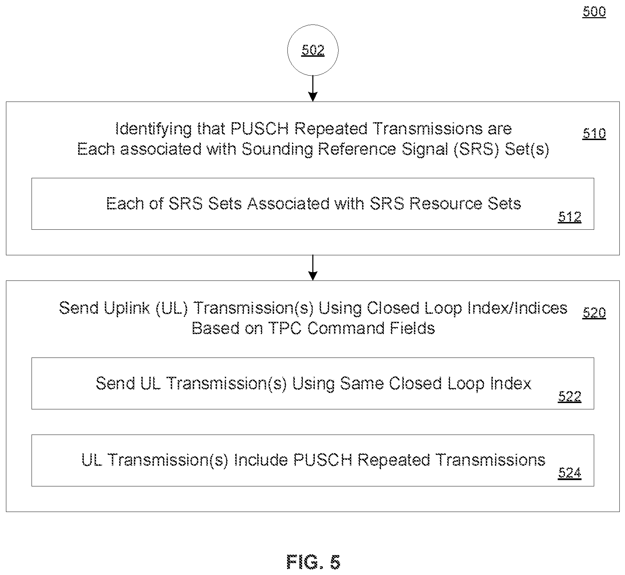

Fig. 5 illustrates an example method of uplink transmission in multi-TRP operation at a wireless communication device further to the example method of Fig. 4. In some implementations, at least one of the example system 100, system 200, and UE 204 performs method 500 according to present implementations. In some implementations, the method 500 begins at step 502. The method 500 then continues to step 510.

At step 510, the example system identifies that PUSCH repeated transmissions are each associated with one or more sounding reference signal (SRS) sets. In some implementations, step 510 includes step 512. At step 512, each of the SRS sets is associated with SRS resource sets. The method 500 then continues to step 520.

At step 520, the example system sends at least one uplink transmission using at least one closed loop index based on the TPC command fields. In some implementations, step 520 includes at least one of steps 522 and 524. At step 522, the example system sends at least one uplink transmission using a same closed lop index. At step 524, the at least one uplink transmission includes the PUCCH repeated transmissions. In some implementations, the method 500 ends at step 520.

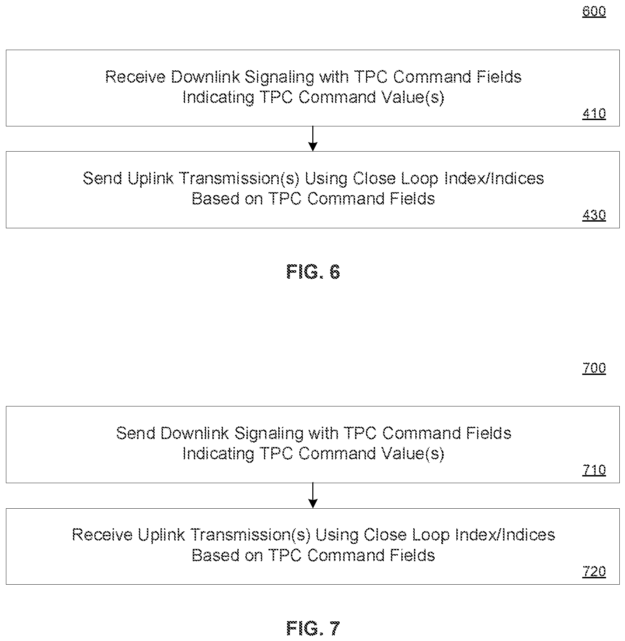

Fig. 6 illustrates a second example method of uplink transmission in multi-TRP operation at a wireless communication device, in accordance with present implementations. In some implementations, at least one of the example system 100, system 200, and UE 204 performs method 600 according to present implementations. In some implementations, the method 600 begins at step 410. At step 410, the example system receives downlink signaling with TPC command fields indicating one or more TPC command values. The method 600 then continues to step 520. At step 520, the example system sends at least one uplink transmission using at least one closed loop index based on the TPC command fields. In some implementations, the method 600 ends at step 520.

Fig. 7 illustrates an example method of uplink transmission in multi-TRP operation at a wireless communication node, in accordance with present implementations. In some implementations, at least one of the example system 100, system 200, and BS 202 performs method 700 according to present implementations. In some implementations, the method 700 begins at step 710. At step 710, the example system sends downlink signaling with TPC command fields indicating one or more TPC command values. The method 700 then continues to step 720. At step 720, the example system receives at least one uplink transmission using at least one closed loop index based on the TPC command fields. In some implementations, the method 700 ends at step 720.

The herein described subject matter sometimes illustrates different components contained within, or connected with, different other components. It is to be understood that such depicted architectures are illustrative, and that in fact many other architectures can be implemented which achieve the same functionality. **In** a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It will be further understood by those within the art that if a specific number of an introduced claim recitation is intended, such an intent will be explicitly recited in the claim, and in the absence of such recitation, no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general, such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

Further, unless otherwise noted, the use of the words "approximate," "about," "around," "substantially," etc., mean plus or minus ten percent.

The foregoing description of illustrative implementations has been presented for purposes of illustration and of description. It is not intended to be exhaustive or limiting with respect to the precise form disclosed, and modifications and variations are possible in light of the above teachings or may be acquired from practice of the disclosed implementations. It is intended that the scope of the invention be defined by the claims appended hereto.

## Claims

1. A wireless communication method, comprising:
identifying, by a wireless communication device, that a Physical Uplink Control Channel, PUCCH, resource, configured for a plurality of PUCCH repeated transmissions, is associated with a plurality of spatial relations or a plurality of power control parameter sets ;
identifying, by the wireless communication device, that the PUCCH resource is associated with a plurality of closed loop indices;
wherein respective values of the plurality of closed loop indices, corresponding to the PUCCH resource, are the same;
receiving, by the wireless communication device from a wireless communication node, a downlink signaling that comprises a plurality of Transmission Power Control, TPC, command fields which indicate a plurality of TPC command values; and
sending, by the wireless communication device, the plurality of PUCCH repeated transmissions using the same closed loop index value.

2. The method of claim 1, wherein each of the plurality of power control parameters sets includes a respective closed loop index.

3. The method of claim 1, wherein a TPC command value of a first one of the plurality of TPC command fields is applied for all the plurality of PUCCH repeated transmissions.

4. A wireless communication method, comprising:
identifying, by a wireless communication device, that each of a plurality of Sounding Reference Signal, SRS, resource sets, associated with a plurality of Physical Uplink Shared Channel, PUSCH, repeated transmissions, is associated with a plurality of spatial relations or a plurality of power control parameter sets;
identifying, by the wireless communication device, that each of the plurality of SRS resource sets is associated with a plurality of closed loop indices;
wherein the plurality of closed loop indices, corresponding to the plurality of SRS resource sets, are the same;
receiving, by the wireless communication device from a wireless communication node, a downlink signaling that comprises a plurality of Transmission Power Control, TPC, command fields which indicate a plurality of TPC command values; and
sending, by the wireless communication device, the plurality of PUSCH repeated transmissions using the same closed loop index value.

5. The method of claim 4, wherein the downlink signaling further comprises a field that indicates whether the PUSCH repeated transmissions are associated with a single or plural SRS resource sets.

6. The method of claim 5, further comprising:
determining, based on the field, whether there are a plurality of SRI fields in the downlink signaling.

7. The method of claim 4, wherein each of the plurality of power control parameters sets includes a respective closed loop index.

8. The method of claim 4, wherein a TPC command value of a first one of the plurality of TPC command fields is applied for all the plurality of PUSCH repeated transmissions.

9. An apparatus comprising at least one processor and a memory, wherein the at least one processor is configured to read code from the memory and implement a method comprising:
identifying that a Physical Uplink Control Channel, PUCCH, resource, configured for a plurality of PUCCH repeated transmissions, is associated with a plurality of spatial relations or a plurality of power control parameter sets;
identifying that the PUCCH resource is associated with a plurality of closed loop indices; wherein respective values of the plurality of closed loop indices, corresponding to the PUCCH resource, are the same;
receiving a downlink signaling that comprises a plurality of Transmission Power Control, TPC, command fields which indicate a plurality of TPC command values; and
sending the plurality of PUCCH repeated transmissions using the same closed loop index value.

10. The apparatus of claim 9, wherein each of the plurality of power control parameters sets includes a respective closed loop index.

11. The apparatus of claim 9, wherein a TPC command value of a first one of the plurality of TPC command fields is applied for all the plurality of PUCCH repeated transmissions.

12. An apparatus comprising at least one processor and a memory, wherein the at least one processor is configured to read code from the memory and implement a method comprising:
identifying, by a wireless communication device, that each of a plurality of Sounding Reference Signal, SRS, resource sets, associated with a plurality of Physical Uplink Shared Channel, PUSCH, repeated transmissions, is associated with a plurality of spatial relations or a plurality of power control parameter sets;
identifying, by the wireless communication device, that each of the plurality of SRS resource sets is associated with a plurality of closed loop indices;
wherein the plurality of closed loop indices, corresponding to the plurality of SRS resource sets, are the same;
receiving, by the wireless communication device from a wireless communication node, a downlink signaling that comprises a plurality of Transmission Power Control, TPC, command fields which indicate a plurality of TPC command values; and
sending, by the wireless communication device, the plurality of PUSCH repeated transmissions using the same closed loop index value.

13. The apparatus of claim 12, wherein the downlink signaling further comprises a field that indicates whether the PUSCH repeated transmissions are associated with a single or plural SRS resource sets.

14. The apparatus of claim 13, wherein the method further comprises:
determining, based on the field, whether there are a plurality of SRI fields in the downlink signaling.

15. The apparatus of claim 12, wherein each of the plurality of power control parameters sets includes a respective closed loop index, and/or
wherein a TPC command value of a first one of the plurality of TPC command fields is applied for all the plurality of PUSCH repeated transmissions.

## Patentansprüche

1. Drahtlos-Kommunikationsverfahren, umfassend:
Identifizieren, durch eine Drahtlos-Kommunikationsvorrichtung, dass eine physikalische Uplinksteuerkanal, PUCCH, -Ressource, die für eine Vielzahl von wiederholten PUCCH-Übertragungen konfiguriert ist, einer Vielzahl von räumlichen Beziehungen oder einer Vielzahl von Sätzen von Leistungssteuerparametern zugeordnet ist;
Identifizieren, durch die Drahtlos-Kommunikationsvorrichtung, dass die PUCCH-Ressource einer Vielzahl von Closed-Loop-Indizes zugeordnet ist;
wobei jeweilige Werte der Vielzahl von Closed-Loop-Indizes, die der PUCCH-Ressource entsprechen, gleich sind;
Empfangen, durch die Drahtlos-Kommunikationsvorrichtung von einem Drahtlos-Kommunikationsknoten, einer Downlink-Signalisierung, die eine Vielzahl von Sendeleistungssteuerungs-, TPC-, Befehlsfeldern umfasst, die eine Vielzahl von TPC-Befehlswerten angeben; und
Senden der Vielzahl von wiederholten PUCCH-Übertragungen durch die Drahtlos-Kommunikationsvorrichtung unter Verwendung desselben Closed-Loop-Indexwerts.

2. Verfahren nach Anspruch 1, wobei jeder der Vielzahl von Sätzen von Leistungssteuerungsparametern einen jeweiligen Closed-Loop-Index umfasst.

3. Verfahren nach Anspruch 1, wobei ein TPC-Befehlswert eines ersten der Vielzahl von TPC-Befehlsfeldern für alle der Vielzahl von wiederholten PUCCH-Übertragungen angewendet wird.

4. Drahtlos-Kommunikationsverfahren, umfassend:
Identifizieren, durch eine Drahtlos-Kommunikationsvorrichtung, dass jeder einer Vielzahl von Sounding Reference Signal-, SRS-, Ressourcensätzen, die einer Vielzahl von physikalischen gemeinsam genutzten Uplinkkanal, PUSCH-, Wiederholungsübertragungen zugeordnet sind, einer Vielzahl von räumlichen Beziehungen oder einer Vielzahl von Leistungsteuerungsparametersätzen zugeordnet ist;
Identifizieren, durch die Drahtlos-Kommunikationsvorrichtung, dass jeder der Vielzahl von SRS-Ressourcensätze einer Vielzahl von Closed-Loop-Indizes zugeordnet ist;
wobei die Vielzahl von Closed-Loop-Indizes, die der Vielzahl von SRS-Ressourcensätzen entsprechen, gleich sind;
Empfangen, durch die Drahtlos-Kommunikationsvorrichtung von einem Drahtlos-Kommunikationsknoten, einer Downlink-Signalisierung, die eine Vielzahl von Sendeleistungssteuerungs-, TPC-, Befehlsfeldern umfasst, die eine Vielzahl von TPC-Befehlswerten angeben; und
Senden der Vielzahl von wiederholten PUSCH-Übertragungen durch die Drahtlos-Kommunikationsvorrichtung unter Verwendung desselben Closed-Loop-Indexwerts.

5. Verfahren nach Anspruch 4, wobei die Downlink-Signalisierung ferner ein Feld umfasst, das angibt, ob die wiederholten PUSCH-Übertragungen mit einem einzigen oder einer Vielzahl von SRS-Ressourcensätzen verbunden sind.

6. Verfahren nach Anspruch 5, welches ferner umfasst:
Bestimmen, auf Grundlage des Feldes, ob eine Vielzahl von SRI-Feldern in der Downlink-Signalisierung vorhanden ist oder nicht.

7. Verfahren nach Anspruch 4, wobei jeder der Vielzahl von Sätzen von Leistungssteuerungsparametern einen jeweiligen Closed-Loop-Index aufweist.

8. Verfahren nach Anspruch 4, wobei ein TPC-Befehlswert eines ersten der Vielzahl von TPC-Befehlsfeldern auf alle der Vielzahl von wiederholten PUSCH-Übertragungen angewendet wird.

9. Vorrichtung, welche zumindest einen Prozessor und einen Speicher aufweist, wobei der zumindest eine Prozessor derart konfiguriert ist, dass er einen Code aus dem Speicher liest und ein Verfahren ausführt, welches umfasst:
Identifizieren, dass eine physikalische Uplinksteuerkanal-, PUCCH-, Ressource, die für eine Vielzahl von wiederholten PUCCH-Übertragungen konfiguriert ist, einer Vielzahl von räumlichen Beziehungen oder einer Vielzahl von Sätzen von Leistungssteuerparametern zugeordnet ist;
Identifizieren, dass die PUCCH-Ressource einer Vielzahl von Closed-Loop-Indizes zugeordnet ist;
wobei jeweilige Werte der Vielzahl von Closed-Loop-Indizes, die der PUCCH-Ressource entsprechen, identisch sind;
Empfangen einer Downlink-Signalisierung, die eine Vielzahl von Sendeleistungssteuerungs-, TPC-, Befehlsfeldern umfasst, die eine Vielzahl von TPC-Befehlswerten angeben; und
Senden der Vielzahl von wiederholten PUCCH-Übertragungen unter Verwendung desselben Closed-Loop-Indexwerts.

10. Vorrichtung nach Anspruch 9, wobei jeder der Vielzahl von Sätzen von Leistungssteuerungsparametern einen jeweiligen Closed-Loop-Indexwert aufweist.

11. Vorrichtung nach Anspruch 9, wobei ein TPC-Befehlswert eines ersten der Vielzahl von TPC-Befehlsfeldern für alle der Vielzahl von wiederholten PUCCH-Übertragungen angewendet wird.

12. Vorrichtung mit zumindest einem Prozessor und einem Speicher, wobei der zumindest eine Prozessor derart konfiguriert ist, dass er einen Code aus dem Speicher liest und ein Verfahren durchführt, das umfasst:
Identifizieren, durch eine Drahtlos-Kommunikationsvorrichtung, dass jeder einer Vielzahl von Sounding Reference Signal-, SRS-, Ressourcensätzen, die einer Vielzahl von physikalischen gemeinsam genutzten Uplinkkanal, PUSCH-, Wiederholungsübertragungen zugeordnet sind, einer Vielzahl von räumlichen Beziehungen oder einer Vielzahl von Leistungsteuerungsparametersätzen zugeordnet ist;
Identifizieren, durch die Drahtlos-Kommunikationsvorrichtung, dass jeder der Vielzahl von SRS-Ressourcensätze einer Vielzahl von Closed-Loop-Indizes zugeordnet ist;
wobei die Vielzahl von Closed-Loop-Indizes, die der Vielzahl von SRS-Ressourcensätzen entsprechen, identisch sind;
Empfangen, durch die Drahtlos-Kommunikationsvorrichtung von einem Drahtlos-Kommunikationsknoten, einer Downlink-Signalisierung, die eine Vielzahl von Sendeleistungssteuerungs-, TPC-, Befehlsfeldern umfasst, die eine Vielzahl von TPC-Befehlswerten angeben; und
Senden der Vielzahl von wiederholten PUSCH-Übertragungen durch die Drahtlos-Kommunikationsvorrichtung unter Verwendung desselben Closed-Loop-Indexwerts.

13. Vorrichtung nach Anspruch 12, wobei die Downlink-Signalisierung ferner ein Feld umfasst, das angibt, ob die wiederholten PUSCH-Übertragungen einer einzigen oder einer Vielzahl von SRS-Ressourcensätzen zugeordnet sind oder nicht.

14. Vorrichtung nach Anspruch 13, wobei das Verfahren ferner umfasst:
Bestimmen, auf Grundlage des Feldes, ob eine Vielzahl von SRI-Feldern in der Downlink-Signalisierung vorhanden ist.

15. Vorrichtung nach Anspruch 12, wobei jeder der Vielzahl von Sätzen von Leistungssteuerungsparametern einen jeweiligen Closed-Loop-Index umfasst, und/oder
wobei ein TPC-Befehlswert eines ersten der Vielzahl von TPC-Befehlsfeldern auf alle der Vielzahl von wiederholten PUSCH-Übertragungen angewendet wird.

## Revendications

1. Procédé de communication sans fil, comprenant :
l'identification, par un dispositif de communication sans fil, qu'une ressource de canal de commande de liaison montante physique, PUCCH, configurée pour une pluralité de transmissions répétées de PUCCH, est associée à une pluralité de relations spatiales ou à une pluralité d'ensembles de paramètres de commande de puissance ;
l'identification, par le dispositif de communication sans fil, que la ressource de PUCCH est associée à une pluralité d'indices de boucle fermée ;
dans lequel des valeurs respectives de la pluralité d'indices de boucle fermée correspondant à la ressource de PUCCH, sont identiques ;
la réception, par le dispositif de communication sans fil en provenance d'un nœud de communication sans fil, d'une signalisation de liaison descendante qui comprend une pluralité de champs d'instruction de commande de puissance de transmission, TPC, qui indiquent une pluralité de valeurs d'instruction TPC ; et
l'envoi, par le dispositif de communication sans fil, de la pluralité de transmissions répétées de PUCCH en utilisant la même valeur d'indice de boucle fermée.

2. Procédé selon la revendication 1, dans lequel chacun de la pluralité d'ensembles de paramètres de commande de puissance comporte un indice de boucle fermée respectif.

3. Procédé selon la revendication 1, dans lequel une valeur d'instruction TPC d'un premier de la pluralité de champs d'instruction TPC est appliquée pour la totalité de la pluralité de transmissions répétées de PUCCH.

4. Procédé de communication sans fil comprenant :
l'identification, par un dispositif de communication sans fil, que chacun d'une pluralité d'ensembles de ressources de signal de référence de sondage, SRS, associés à une pluralité de transmissions répétées de canal partagé de liaison montante physique, PUSCH, est associé à une pluralité de relations spatiales ou à une pluralité d'ensembles de paramètres de commande de puissance ;
l'identification, par le dispositif de communication sans fil, que chacun de la pluralité d'ensembles de ressources SRS est associé à une pluralité d'indices de boucle fermée ;
dans lequel la pluralité d'indices de boucle fermée correspondant à la pluralité d'ensembles de ressources SRS sont identiques ;
la réception, par le dispositif de communication sans fil en provenance d'un nœud de communication sans fil, d'une signalisation de liaison descendante qui comprend une pluralité de champs d'instruction de commande de puissance de transmission, TPC, qui indiquent une pluralité de valeurs d'instruction TPC ; et
l'envoi, par le dispositif de communication sans fil, de la pluralité de transmissions répétées de PUSCH en utilisant la même valeur d'indice de boucle fermée.

5. Procédé selon la revendication 4, dans lequel la signalisation de liaison descendante comprend en outre un champ qui indique si les transmissions répétées de PUSCH sont associées à un unique ou une multitude d'ensembles de ressources SRS.

6. Procédé selon la revendication 5, comprenant en outre :
la détermination, sur la base du champ, de savoir s'il existe ou non une pluralité de champs SRI dans la signalisation de liaison descendante.

7. Procédé selon la revendication 4, dans lequel chacun de la pluralité d'ensembles de paramètres de commande de puissance comporte un indice de boucle fermée respectif.

8. Procédé selon la revendication 4, dans lequel une valeur d'instruction TPC d'un premier de la pluralité de champs d'instruction de commande, TPC, est appliquée à la totalité de la pluralité de transmissions répétées de PUSCH.

9. Appareil comprenant au moins un processeur et une mémoire, dans lequel l'au moins un processeur est configuré pour lire un code provenant de la mémoire et pour mettre en œuvre un procédé comprenant :
l'identification qu'une ressource de canal de commande de liaison montante physique, PUCCH, configurée pour une pluralité de transmissions répétées de PUCCH, est associée à une pluralité de relations spatiales ou à une pluralité d'ensembles de paramètres de commande de puissance ;
l'identification que la ressource de PUCCH est associée à une pluralité d'indices de boucle fermée ;
dans lequel des valeurs respectives de la pluralité d'indices de boucle fermée, correspondant à la ressource de PUCCH, sont identiques ;
la réception d'une signalisation de liaison descendante qui comprend une pluralité de champs d'instruction de commande de puissance de transmission, TPC, qui indiquent une pluralité de valeurs d'instruction TPC ; et
l'envoi de la pluralité de transmission répétées de PUCCH en utilisant la même valeur d'indice de boucle fermée.

10. Appareil selon la revendication 9, dans lequel chacun de la pluralité d'ensembles de paramètres de commande de puissance comporte un indice de boucle fermée respectif.

11. Appareil selon la revendication 9, dans lequel une valeur d'instruction TPC d'un premier de la pluralité de champs d'instruction TPC est appliquée pour la totalité de la pluralité de transmissions répétées de PUCCH.

12. Appareil comprenant au moins un processeur et une mémoire, dans lequel l'au moins un processeur est configuré pour lire un code provenant de la mémoire et pour mettre en œuvre un procédé comprenant :
l'identification, par un dispositif de communication sans fil, que chacun d'une pluralité d'ensembles de ressources de signal de référence de sondage, SRS, associés à une pluralité de transmissions répétées de canal partagé de liaison montante physique, PUSCH, est associé à une pluralité de relations spatiales ou à une pluralité d'ensembles de paramètres de commande de puissance ;
l'identification, par le dispositif de communication sans fil, que chacun de la pluralité d'ensembles de ressources SRS est associé à une pluralité d'indices de boucle fermée ;
dans lequel la pluralité d'indices de boucle fermée, correspondant à la pluralité d'ensembles de ressources SRS, sont identiques ;
la réception, par le dispositif de communication sans fil en provenance d'un nœud de communication sans fil, d'une signalisation de liaison descendante qui comprend une pluralité de champs d'instruction de commande de puissance de transmission, TPC, qui indiquent une pluralité de valeurs d'instruction TPC ; et
l'envoi, par le dispositif de communication sans fil, de la pluralité de transmissions répétées de PUSCH en utilisant la même valeur d'indice de boucle fermée.

13. Appareil selon la revendication 12, dans lequel la signalisation de liaison descendante comprend en outre un champ qui indique si les transmissions répétées de PUSCH sont associées ou non à un unique ou une multitude d'ensembles de ressources SRS.

14. Appareil selon la revendication 13, dans lequel le procédé comprend en outre :
la détermination, sur la base du champ, s'il existe une pluralité de champs SRI dans la signalisation de liaison descendante.

15. Appareil selon la revendication 12, dans lequel chacun de la pluralité d'ensembles de paramètres de commande de puissance comporte un indice de boucle fermée respectif, et/ou
dans lequel une valeur d'instruction TPC d'un premier de la pluralité de champs d'instruction TPC est appliquée à la totalité de la pluralité de transmissions répétées de PUSCH.
